# EUROPÄISCHE PATENTANMELDUNG

(11) **EP 4 796 895 A1**
(43) Veröffentlichungstag der Anmeldung: **26.08.2026**
(21) Anmeldenummer: 25159954.4
(22) Anmeldetag: 25.02.2025
(51) Int. Cl.: G01B 11/30, B21B 38/02, G01N 21/89

(54) **ROBUSTE ERMITTLUNG VON RANDWELLEN EINES METALLBANDES**

(71) Anmelder: Primetals Technologies Germany GmbH, 91058 Erlangen (DE)
(72) Erfinder: Kerschensteiner, Martin, 92348 Berg (DE); Loehe, Klaus, 90768 Fürth (DE); Wassermann, Dominik, 86150 Augsburg (DE)
(74) Vertreter: Metals@Linz

(57) **Zusammenfassung**

Ein Metallband (2), das sich in einer Breitenrichtung (yB) über eine Bandbreite (b) von einer bedienseitigen zu einer antriebsseitigen Bandkante (4, 5) erstreckt, läuft in einer Transportrichtung (xB) aus einem Walzgerüst (1) aus. Eine Auswertungseinrichtung (13) nimmt von einer Kamera (8) iterativ immer wieder ein von der Kamera (8) erfasstes Bild (B) des Metallbandes (2) entgegen. Die Kamera (8) ist seitlich oberhalb des Metallbandes (2) angeordnet. Die Auswertungseinrichtung (13) ermittelt in einem auf das jeweilige Bild (B) bezogenen zweidimensionalen Koordinatensystem für die bedienseitige und die antriebsseitige Bandkante (4, 5) den Wert der einen Koordinate (y) als Funktion der anderen Koordinate (x) und dadurch in dem jeweiligen Bild (B) einen Verlauf der jeweiligen Bandkante (4, 5) als Funktion der anderen Koordinate (x). Die Auswertungseinrichtung (13) ermittelt anhand des funktionalen Verlaufs der jeweiligen Bandkante (4, 5) innerhalb eines jeweiligen Auswertungsbereiches (16) der Bilder (B) ein Maß (M1, M2) für die Randwelligkeit der jeweiligen Bandkante (4, 5).

## Beschreibung

### Gebiet der Technik

Die vorliegende Erfindung geht aus von einem Ermittlungsverfahren für eine Randwelligkeit eines Metallbandes, das sich in einer Breitenrichtung über eine Bandbreite von einer bedienseitigen zu einer antriebsseitigen Bandkante erstreckt und in einer Transportrichtung aus einem Walzgerüst ausläuft,
- wobei eine Auswertungseinrichtung von einer Kamera iterativ immer wieder ein von der Kamera erfasstes Bild des Metallbandes entgegennimmt.

Die vorliegende Erfindung geht weiterhin aus von einem Computerprogramm für eine softwareprogrammierbare Auswertungseinrichtung, wobei das Computerprogramm Maschinencode umfasst, der von der Auswertungseinrichtung unmittelbar abarbeitbar ist, wobei die Abarbeitung des Maschinencodes durch die Auswertungseinrichtung bewirkt, dass die Auswertungseinrichtung ein derartiges Ermittlungsverfahren ausführt.

Die vorliegende Erfindung geht weiterhin aus von einer Auswertungseinrichtung, wobei die Auswertungseinrichtung softwareprogrammierbar ist und mit einem derartigen Computerprogramm programmiert ist, so dass die Auswertungseinrichtung ein derartiges Ermittlungsverfahren ausführt.

Die vorliegende Erfindung geht weiterhin aus von einer Walzeinrichtung,
- wobei die Walzeinrichtung ein Walzgerüst zum Walzen eines sich in einer Breitenrichtung über eine Bandbreite von einer bedienseitigen zu einer antriebsseitigen Bandkante erstreckenden Metallbandes aufweist, so dass das Metallband in einer Transportrichtung aus dem Walzgerüst ausläuft,
- wobei die Walzeinrichtung eine Kamera aufweist,
- wobei die Walzeinrichtung eine Auswertungseinrichtung aufweist, die mit der Kamera zum Entgegennehmen von mittels der Kamera erfassten Bildern datentechnisch verbunden ist, als derartige Auswertungseinrichtung ausgebildet ist und ein derartiges Ermittlungsverfahren ausführt.

### Stand der Technik

Die genannten Gegenstände sind beispielsweise aus der WO 2023/041 253 A1 bekannt.

Bei der genannten WO-Schrift ist die Kamera mittig oberhalb des Metallbandes angeordnet. Die Lage der Bandkanten wird detektiert, um den Bereich zu bestimmen, innerhalb dessen eine weitergehende Auswertung des Metallbandes auf Welligkeiten erfolgen soll. Hierbei werden Intensitätsschwankungen von in Transportrichtung des Metallbandes verlaufenden Streifen ausgewertet. Die einzelnen Streifen weisen jeweils nur eine geringe Breite auf. In ihrer Gesamtheit überdecken sie jedoch das Metallband über seine gesamte Breite. Die Auswertung der beiden Streifen an den Rändern des Metallbandes liefert daher ein Maß für auftretende Randwellen.

Die Erfassung von Bildern eines aus einem Walzgerüst auslaufenden Metallbandes und die hierauf aufbauende Ermittlung von Planheitswerten sind auch aus der WO 2021/105 364 A2, der JP H04 279 208 A und der EP 2 258 492 A1 bekannt.

### Zusammenfassung der Erfindung

Beim Walzen eines Metallbandes ist es das ständige Bestreben, ein flaches Metallband herzustellen, das sowohl in sich spannungsfrei ist als auch nach außen hin verzerrungsfrei und damit plan ist. Wird ein Metallband in Breitenrichtung gesehen völlig gleichmäßig gewalzt, d.h. mit einer in Breitenrichtung gesehen einheitlichen relativen Stichabnahme, ist dies der Fall. Erfolgt eine in Breitenrichtung ungleichmäßige Walzung, werden (in Breitenrichtung gesehen) manche Längsstreifen des Metallbandes stärker gewalzt als andere Längsstreifen des Metallbandes. Das Metallband bildet daher in den stärker gewalzten Längsstreifen Wellen aus. Hierbei können Mittelwellen, Randwellen und sogenannte Viertelwellen auftreten. Das Metallband wird also unplan, die äußere (= sichtbare) Planheit ist von 0 verschieden. Bei kleinen Längenunterschieden oder wenn das Metallband mit einem Zug beaufschlagt wird, ist die äußere Planheit zwar gleich 0. Im Falle der Beaufschlagung mit Zug resultieren aus den Längenunterschieden jedoch innere Zugspannungsunterschiede. In diesem Fall ist also die innere Spannung des Metallbandes von 0 verschieden. Die genannten Wellen können bei großen Unplanheiten auch dann noch vorhanden sein, wenn das Metallband mit Zug beaufschlagt ist. Die Erkennung und nach Möglichkeit Korrektur von Planheitsfehlern im gewalzten Metallband ist von großer Bedeutung.

Die Umweltbedingungen beim Walzen eines Metallbandes sind oftmals herausfordernd, beispielsweise durch hohe Temperaturen, Vibration, Wasser bzw. Wasserdampf, Öldämpfe sowie Schmutz- und Rostpartikel. Dies erschwert den Betrieb von Messgeräten zum Erfassen von für Planheitsfehler charakteristischen Werten und führt oftmals zu hohen Kosten und zu einem hohen Platzbedarf.

Die Aufgabe der vorliegenden Erfindung besteht darin, Möglichkeiten zu schaffen, mittels derer in dem gewalzten Metallband auf einfache Art und Weise zumindest Randwellen erkannt werden können.

Die Aufgabe wird durch ein Ermittlungsverfahren mit den Merkmalen des Anspruchs 1 gelöst. Vorteilhafte Ausgestaltungen des Betriebsverfahrens sind Gegenstand der abhängigen Ansprüche 2 bis 16.

Erfindungsgemäß wird ein Ermittlungsverfahren der eingangs genannten Art dadurch ausgestaltet,
- dass die Kamera seitlich oberhalb des Metallbandes angeordnet ist,
- dass die Auswertungseinrichtung in einem auf das jeweilige Bild bezogenen zweidimensionalen Koordinatensystem für die bedienseitige und die antriebsseitige Bandkante den Wert der einen Koordinate als Funktion der anderen Koordinate und dadurch in dem jeweiligen Bild einen Verlauf der jeweiligen Bandkante als Funktion der anderen Koordinate ermittelt und
- dass die Auswertungseinrichtung anhand des funktionalen Verlaufs der jeweiligen Bandkante innerhalb eines jeweiligen Auswertungsbereiches der Bilder ein Maß für die Randwelligkeit der jeweiligen Bandkante ermittelt.

Die Formulierung, dass die Kamera "seitlich oberhalb des Metallbandes angeordnet" ist, beschränkt die Anordnung der Kamera in zweierlei Hinsicht. Zum einen muss die Kamera derart angeordnet sein, dass sie in Vertikalrichtung gesehen oberhalb des Metallbandes angeordnet ist, so dass die erfassten Bilder die Oberseite des Metallbandes zeigen. Zum anderen muss die Kamera derart angeordnet sein, dass in der Breitenrichtung gesehen die bedienseitige Bandkante zwischen der Kamera und der antriebsseitigen Bandkante angeordnet ist. Die Kamera ist also nicht über dem Metallband angeordnet. Wäre die Kamera über dem Metallband angeordnet, nicht aber seitlich oberhalb, wäre sie in der Breitenrichtung gesehen zwischen den beiden Bandkanten angeordnet.

Die Anordnung der Kamera hat Auswirkungen auf die Sachverhalte, die mittels der Kamera erfassbar und in den erfassten Bildern erkennbar sind. Insbesondere ist in den auf die erfindungsgemäße Art und Weise erfassten Bildern für einen bestimmten Wert der anderen Koordinate der Wert der einen Koordinate von der Höhenlage der entsprechenden Bandkante abhängig. Wäre die Kamera hingegen über dem Metallband angeordnet, würde der Wert der einen Koordinate nicht oder zumindest nur unwesentlich von der Höhenlage der entsprechenden Bandkante an diesem Ort abhängen.

Die in den Bildern ermittelte bedienseitige Bandkante ist an dieser Seite des Metallbandes die untere Bandkante. Die obere bedienseitige Bandkante ist in den Bildern zwar abgebildet, in der Regel aber nicht erkennbar. Die in den Bildern ermittelte antriebsseitige Bandkante ist an dieser Seite die obere Bandkante. Die untere antriebsseitige Bandkante ist in den Bildern von dem Metallband als solches verdeckt.

Die erfassten Bilder sind zweidimensional. Es kann sich um "normale" optische Bilder, d.h. mit einer Erfassung im sichtbaren Spektrum, oder um Infrarotbilder handeln. Infrarotbilder bieten sich insbesondere dann an, wenn das Metallband in dem Walzgerüst warmgewalzt wird. Das erfindungsgemäße Ermittlungsverfahren ist aber nicht nur beim Warmwalzen eines Metallbandes anwendbar, sondern auch beim Kaltwalzen eines Metallbandes.

Das erfindungsgemäße Ermittlungsverfahren ist vielseitig anwendbar. Beispielsweise kann es - ähnlich wie bei der WO 2023/041 253 A1 - in eine Planheitsregelung eingebunden sein. In diesem Fall muss das Ermittlungsverfahren in Echtzeit ausgeführt werden. Die Auswertungseinrichtung ist in diesem Fall entweder selbst die Steuereinrichtung für das Walzgerüst oder sie ist mit einer derartigen Steuereinrichtung datentechnisch verbunden. Alternativ oder zusätzlich kann das erfindungsgemäße Ermittlungsverfahren in eine Adaption eines Modells eingebunden sein, mittels dessen eine Set-up-Berechnung für das Walzen eines nachfolgenden Metallbandes erfolgt. In diesem Fall ist eine Ausführung in Echtzeit nicht erforderlich. Wiederum alternativ oder zusätzlich kann die Auswertungseinrichtung mit einer Bedienperson kommunizieren. Beispielsweise kann die Auswertungseinrichtung die ermittelten Maße für die Randwelligkeit der Bandkanten an die Bedienperson ausgeben, insbesondere visualisieren. Auch kann die Auswertungseinrichtung beispielsweise bei Überschreiten eines Schwellenwertes einen optischen, akustischen und/oder andersartigen Alarm an die Bedienperson ausgeben.

Vorzugsweise verläuft die Richtung der anderen Koordinate der Koordinatensysteme im wesentlichen in der Transportrichtung. Diese Ausgestaltung erleichtert die Auswertung der Bilder. Der Begriff "im wesentlichen" soll eine Abweichung Richtung der anderen Koordinate von der Transportrichtung von maximal 5° bedeuten.

In aller Regel bilden die Bildelemente des jeweiligen Bildes ein orthogonales, gleichmäßiges Raster, das zwei zueinander orthogonale Vorzugsrichtungen aufweist. Vorzugsweise stimmt die andere Koordinate der Koordinatensysteme im wesentlichen mit einer dieser beiden Vorzugsrichtungen überein. Auch diese Ausgestaltung erleichtert die Auswertung der Bilder. Der Begriff "im wesentlichen" soll ebenso wie zuvor eine Abweichung der anderen Koordinate von der Vorzugsrichtung von maximal 5° bedeuten.

Im einfachsten Fall ist der Auswertungsbereich der Auswertungseinrichtung fest vorgegeben. Alternativ ist es möglich, dass die Auswertungseinrichtung den Auswertungsbereich von einer Bedienperson entgegennimmt. Diese Ausgestaltung ist einerseits einfach, andererseits aber dennoch sehr flexibel. In einer wiederum anderen Ausgestaltung ermittelt die Auswertungseinrichtung den Auswertungsbereich selbsttätig anhand der entgegengenommenen Bilder. In diesem Fall kann einerseits der Auswertungsbereich auf flexible Weise optimiert werden und wird andererseits die Bedienperson von der genauen Bestimmung entlastet. Unabhängig davon, welche Vorgehensweise ergriffen wird, bewirkt die geeignete Festlegung des Auswertungsbereichs, dass störende Effekte, die im vorderen und hinteren Bereich des Metallbandes auftreten können, ausgeblendet werden können.

Sofern eine selbsttätige Ermittlung des Auswertungsbereichs erfolgt, ist vorzugsweise vorgesehen, dass die Auswertungseinrichtung zu diesem Zweck
- eine vorläufige untere und/oder eine vorläufige obere Grenze für die andere Koordinate festlegt und für eine Mehrzahl von Bildern zwischen der vorläufigen unteren und der vorläufigen oberen Grenze für die jeweilige Bandkante die Streuung oder die Varianz des jeweiligen funktionalen Verlaufs in Richtung der einen Koordinate ermittelt,
- die vorläufige untere und/oder vorläufige obere Grenze variiert und für die Mehrzahl von Bildern innerhalb der variierten vorläufigen unteren und der variierten vorläufigen oberen Grenze erneut die Streuung oder die Varianz des jeweiligen funktionalen Verlaufs in Richtung der einen Koordinate ermittelt und
- anhand der Änderung der Streuung oder der Varianz des jeweiligen funktionalen Verlaufs in Richtung der einen Koordinate bestimmt, ob und gegebenenfalls in welche Richtung sie die vorläufige untere und/oder vorläufige obere Grenze erneut variiert oder endgültig als obere und/oder untere Grenze übernimmt.

In einer einfachen Ausgestaltung ermittelt die Auswertungseinrichtung für die Bilder einzeln das Maß für die Randwelligkeit der jeweiligen Bandkante. Das Maß für die Randwelligkeit der jeweiligen Bandkante wird also für jedes einzelne Bild unabhängig von den anderen Bildern ermittelt. Diese Art der Auswertung ist insbesondere für den Bandkopf und eventuell auch für den Bandfuß sinnvoll, wenn also das Metallband nicht mit einem Zug beaufschlagt ist.

Im Falle der Auswertung einzelner Bilder ist es beispielsweise möglich, dass die Auswertungseinrichtung zum Ermitteln des Maßes der Randwelligkeit der jeweiligen Bandkante das Ortsspektrum des funktionalen Verlaufs der jeweiligen Bandkante in dem jeweiligen Bild ermittelt und das ermittelte Ortsspektrum auswertet. Beispielsweise kann die Auswertungseinrichtung die größte Amplitude und deren Ortsfrequenz ermitteln oder die Amplituden, die oberhalb eines Schwellenwertes liegen, und die zugehörigen Ortsfrequenzen ermitteln. Das Ermitteln des Ortsspektrums kann beispielsweise durch eine örtliche Fouriertransformation erfolgen, insbesondere durch eine FFT (= fast fourier transformation).

Alternativ zu einem Auswerten Bild für Bild ist es möglich, dass die Auswertungseinrichtung zum Ermitteln des Maßes für die Randwelligkeit der jeweiligen Bandkante eine Sequenz von erfassten Bildern des Metallbandes verwertet. Diese Art der Auswertung ist insbesondere dann von Vorteil, wenn das Metallband mit einem Zug beaufschlagt ist. Auch in diesem Fall können sich - je nach Ausmaß des Zuges - Randwellen zeigen. In der Regel folgen die Bilder der ausgewerteten Sequenz zeitlich unmittelbar aufeinander. Es werden also keine erfassten Bilder übersprungen. Im Einzelfall ist dies jedoch möglich.

Zum Auswerten einer ganzen Sequenz von Bildern ist es von Vorteil, wenn die Verläufe der Bandkanten von Bild zu Bild direkt vergleichbar sind. Vorzugsweise ist daher vorgesehen, dass die Auswertungseinrichtung in den Bildern der Sequenz zum Auswerten des funktionalen Verlaufs der jeweiligen Bandkante in dem Auswertungsbereich des jeweiligen Bildes für das jeweilige Bild den Mittelwert des jeweiligen funktionalen Verlaufs in Richtung der einen Koordinate ermittelt und den ermittelten Mittelwert von dem in dem jeweiligen Bild ermittelten funktionalen Verlauf der jeweiligen Bandkante subtrahiert und so einen modifizierten funktionalen Verlauf der jeweiligen Bandkante in dem jeweiligen Bild ermittelt und aufbauend auf den modifizierten Verläufen für die Sequenz von Bildern weitere Auswertungen vornimmt.

In vielen Fällen führt es zu guten Ergebnissen, wenn die weiteren Auswertungen eine statistische Auswertung der modifizierten Verläufe der jeweiligen Bandkante in den Bildern der Sequenz umfassen. Dies gilt ganz besonders dann, wenn die statistische Auswertung eine in der anderen Koordinate ortsaufgelöste Ermittlung von statistischen Größen des jeweiligen modifizierten funktionalen Verlaufs in Richtung der einen Koordinate umfasst.

Beispielsweise können für einen bestimmten Wert der anderen Koordinate über die Bilder der Sequenz hinweg der Mittelwert, die Streuung, die Varianz und ähnliche Größen der modifizierten Verläufe der jeweiligen Bandkante ermittelt werden. Beispielsweise kann die Auswertungseinrichtung das Maß für die Randwelligkeit der jeweiligen Bandkante aus der Streuung oder der Varianz für einen bestimmten Wert der anderen Koordinate oder dem funktionalen Verlauf der Streuung oder der Varianz als Funktion der anderen Koordinate ermitteln. Alternativ oder zusätzlich kann die Auswertungseinrichtung das Maß für die Randwelligkeit der jeweiligen Bandkante aus dem funktionalen Verlauf des Mittelwerts als Funktion der anderen Koordinate ermitteln. Die letztgenannte Auswertung kann auf die gleiche Art und Weise erfolgen, die vorstehend für ein einzelnes Bild erläutert wurde.

Alternativ zu einer statistischen Auswertung ist es möglich, dass die Auswertungseinrichtung das Maß für die Randwelligkeit der jeweiligen Bandkante dadurch ermittelt, dass sie ortsaufgelöst in der anderen Koordinate über die Sequenz von Bildern hinweg für die modifizierten funktionalen Verläufe der Bandkanten die zeitliche Änderung in Richtung der einen Koordinate auswertet.

Zu diesem Zweck ist es insbesondere möglich, dass die Auswertungseinrichtung ein Zeitspektrum der zeitlichen Änderung in Richtung der einen Koordinate ermittelt und das Zeitspektrum auswertet. Beispielsweise kann die Steuereinrichtung die größte Amplitude und deren Frequenz ermitteln oder die Amplituden, die oberhalb eines Schwellenwertes liegen, und die zugehörigen Frequenzen ermitteln. Das Ermitteln des Zeitspektrums kann beispielsweise durch eine zeitliche Fouriertransformation erfolgen, insbesondere durch eine FFT (= fast fourier transformation).

Vorzugsweise übernimmt die Auswertungseinrichtung Änderungen des Maßes für die Randwelligkeit der jeweiligen Bandkante erst dann als gültig, wenn diese Änderungen für eine Zeitdauer bestehen, die größer als eine Minimalzeitdauer ist. Dadurch können auf einfache Weise kurzzeitige Schwankungen und Störungen ausgefiltert werden.

Vorzugsweise ermittelt die Auswertungseinrichtung eine Bewegung der Kamera beim Erfassen der Bilder und korrigiert die Lage des jeweiligen Koordinatensystems in den erfassten Bildern vor dem Ermitteln des funktionalen Verlaufs der jeweiligen Bandkante um die Bewegung der Kamera. Dadurch kann eine große Fehlerquelle beseitigt werden.

Zum Ermitteln der Bewegung der Kamera kann die Kamera beispielsweise Beschleunigungs- und/oder Rotationssensoren umfassen. In diesem Fall kann die Auswertungseinrichtung die entsprechenden Sensorsignale entgegennehmen und daraus die Bewegung der Kamera ermitteln. Auch ist es möglich, dass der Auswertungseinrichtung die Orte von festen Strukturen bekannt sind, die in den erfassten Bildern vorhanden sein müssen. In diesem Fall kann die Auswertungseinrichtung ermitteln, an welchen Stellen in den erfassten Bildern die festen Strukturen vorhanden sind, und daraus die Bewegung der Kamera ermitteln. Die festen Strukturen können beispielsweise ein Gerüstständer des Walzgerüsts oder eines nachgeordneten Walzgerüsts oder an einem Gerüstständer angeordnete Elemente sein. Als "feste Struktur" kann gegebenenfalls auch ein Schlingenheber angesehen werden, sofern der Auswertungseinrichtung dessen jeweils aktuelle Position bekannt ist.

Die Aufgabe wird weiterhin durch ein Computerprogramm mit den Merkmalen des Anspruchs 17 gelöst. Erfindungsgemäß bewirkt die Abarbeitung des Maschinencodes durch die Auswertungseinrichtung, dass die Auswertungseinrichtung ein erfindungsgemäßes Ermittlungsverfahren ausführt.

Die Aufgabe wird weiterhin durch eine Auswertungseinrichtung mit den Merkmalen des Anspruchs 18 gelöst. Erfindungsgemäß ist die Auswertungseinrichtung softwareprogrammierbar und mit einem erfindungsgemäßen Computerprogramm programmiert, so dass die Auswertungseinrichtung ein erfindungsgemäßes Ermittlungsverfahren ausführt.

Die Aufgabe wird weiterhin durch eine Walzeinrichtung mit den Merkmalen des Anspruchs 19 gelöst. Erfindungsgemäß ist bei einer Walzeinrichtung der eingangs genannten Art die Kamera seitlich oberhalb einer Passline angeordnet, auf welcher das Metallband aus dem Walzgerüst ausläuft, und ist die Auswertungseinrichtung als erfindungsgemäße Auswertungseinrichtung ausgebildet, die ein erfindungsgemäßes Ermittlungsverfahren ausführt.

In vielen Fällen weist die Walzeinrichtung ein weiteres Walzgerüst auf, das auslaufseitig des erstgenannten Walzgerüsts angeordnet ist. In diesem Fall ist die Kamera in Transportrichtung des Metallbandes gesehen vorzugsweise zwischen dem erstgenannten Walzgerüst und dem weiteren Walzgerüst angeordnet. Die Kamera "sieht" also vorzugsweise im wesentlichen quer auf das Metallband. Dadurch ergibt sich zum einen eine qualitativ besonders hochwertige Erfassung der Bandkanten und zum anderen eine leichte Auswertung.

Weiterhin ist die Kamera vorzugsweise derart angeordnet, dass eine bedienseitige Verbindungslinie von der Kamera zu der bedienseitigen Bandkante mit einer die bedienseitige Bandkante enthaltenden bedienseitigen Vertikalebene einen bedienseitigen Winkel bildet, der zwischen 30° und 70° liegt, und/oder eine antriebsseitige Verbindungslinie von der Kamera zu der antriebsseitigen Bandkante mit einer die antriebsseitige Bandkante enthaltenden antriebsseitigen Vertikalebene einen antriebsseitigen Winkel bildet, der zwischen 30° und 70° liegt. Bei Winkeln unter 30° zeigen sich die Randwellen nur ungenügend in den erfassten Bildern. Bei Winkeln über 70° wird eine Unterscheidung zwischen den beiden Bandkanten allmählich immer schwerer.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine Walzeinrichtung von der Seite,
- FIG 2: die Walzeinrichtung von FIG 1 von oben,
- FIG 3: die Walzeinrichtung von FIG 1 entgegen einer Transportrichtung eines Metallbandes gesehen,
- FIG 4: ein Ablaufdiagramm,
- FIG 5: ein Ablaufdiagramm,
- FIG 6: ein Bild und Inhalte des Bildes,
- FIG 7: ein Ablaufdiagramm,
- FIG 8: ein Ortsspektrum,
- FIG 9: ein Ablaufdiagramm,
- FIG 10: eine Häufigkeitsverteilung,
- FIG 11: modifizierte Werte in Richtung einer Koordinate bei einem einheitlichen Wert einer anderen Koordinate,
- FIG 12: eine Ermittlung und eine Auswertung eines Zeitspektrums,
- FIG 13: ein Ablaufdiagramm,
- FIG 14: ein Ablaufdiagramm,
- FIG 15: ein Ablaufdiagramm und
- FIG 16: ein Bild und Inhalte des Bildes.

### Beschreibung der Ausführungsformen

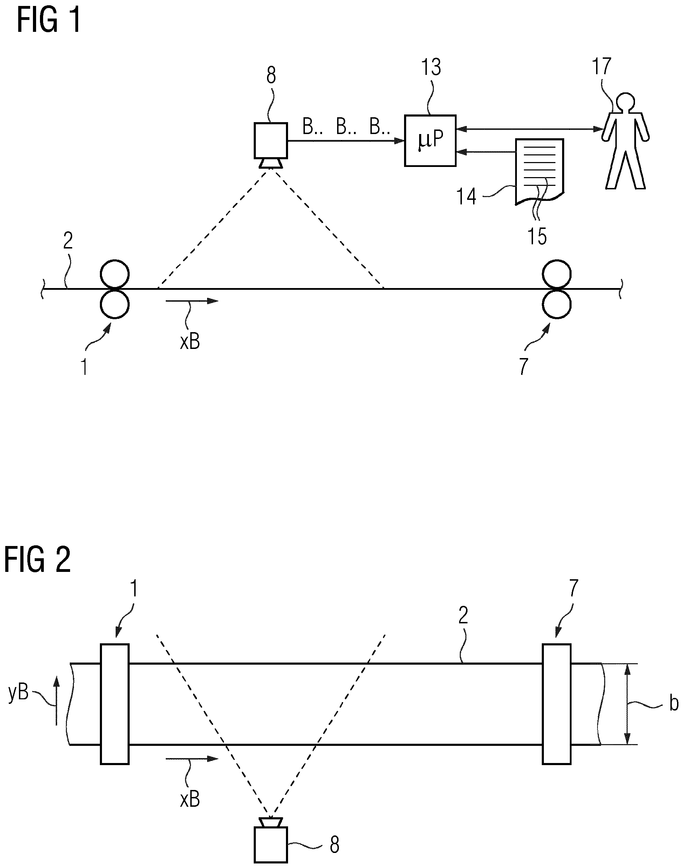

Gemäß den FIG 1 bis 3 wird in einem Walzgerüst 1 ein Metallband 2 gewalzt. Von dem Walzgerüst 1 sind in den FIG 1 bis 3 nur die Arbeitswalzen dargestellt. In der Regel weist das Walzgerüst 1 zusätzlich zu den Arbeitswalzen jedoch weitere Walzen auf, insbesondere Stützwalzen. Das Metallband 2 erstreckt sich in einer Breitenrichtung yB über eine Bandbreite b. Auf der einen Seite befinden sich eine obere bedienseitige Bandkante 3 und eine untere bedienseitige Bandkante 4. Auf der anderen Seite befinden sich eine obere antriebsseitige Bandkante 5 und eine untere antriebsseitige Bandkante 6. Das Metallband 2 läuft in einer Transportrichtung xB aus dem Walzgerüst 1 aus. In vielen Fällen ist zusätzlich zu dem Walzgerüst 1 weiterhin ein weiteres Walzgerüst 7 vorhanden. Das weitere Walzgerüst 7 ist, sofern es vorhanden ist, auslaufseitig des Walzgerüsts 1 angeordnet. Auch von dem Walzgerüst 7 sind in den FIG 1 und 2 nur die Arbeitswalzen dargestellt. In der Regel weist auch das weitere Walzgerüst 7 zusätzlich zu den Arbeitswalzen weitere Walzen auf, insbesondere Stützwalzen.

Es ist weiterhin eine Kamera 8 vorhanden. Die Kamera 8 ist gemäß den FIG 1 bis 3 seitlich oberhalb einer Passline angeordnet, auf welcher das Metallband 2 aus dem Walzgerüst 1 ausläuft. Die Kamera 8 "blickt" also seitlich von oben auf das Metallband 2. Die von der Kamera 8 ausgehenden gestrichelten Linien sollen den Erfassungsbereich der Kamera 8 andeuten. Der Erfassungsbereich ist derart gewählt, dass sowohl die beiden bedienseitigen Bandkanten 3, 4 als auch die obere antriebsseitige Bandkante 5 im Erfassungsbereich liegen.

Eine bedienseitige Verbindungslinie 9 von der Kamera 8 zu der (unteren) bedienseitigen Bandkante 4 bildet mit einer bedienseitigen Vertikalebene 10 einen bedienseitigen Winkel α1. Die bedienseitige Vertikalebene 10 ist dadurch definiert, dass sie die (untere) bedienseitige Bandkante 4 enthält und vertikal verläuft. Vorzugsweise ist die Kamera 8 derart angeordnet, dass der bedienseitige Winkel α1 zwischen 30° und 70° liegt. Genau genommen variiert der bedienseitige Winkel α1 über den Erfassungsbereich, über den die bedienseitige Bandkante 4 erfasst wird. Als bedienseitiger Winkel α1 kann nach Bedarf der Maximalwert, der Minimalwert oder der arithmetische Mittelwert des bedienseitigen Winkels α1 herangezogen werden.

In analoger Weise bildet eine antriebsseitige Verbindungslinie 11 von der Kamera 8 zu der (oberen) antriebsseitigen Bandkante 5 mit einer antriebsseitigen Vertikalebene 12 einen antriebsseitigen Winkel α2. Die antriebsseitige Vertikalebene 12 ist dadurch definiert, dass sie die (obere) antriebsseitige Bandkante 5 enthält und vertikal verläuft. Vorzugsweise ist die Kamera 8 derart angeordnet, dass der antriebsseitige Winkel α2 zwischen 30° und 70° liegt. Analog zum bedienseitigen Winkel α1 variiert auch der bedienseitige Winkel α2 über den Erfassungsbereich, über den die antriebsseitige Bandkante 5 erfasst wird. Als antriebsseitiger Winkel α2 kann nach Bedarf der Maximalwert, der Minimalwert oder der arithmetische Mittelwert des antriebsseitigen Winkels α2 herangezogen werden. In jedem Fall aber ist der antriebsseitige Winkel α2 größer als der bedienseitige Winkel α1.

Sofern das weitere Walzgerüst 7 vorhanden ist, ist weiterhin die Kamera 8 in Transportrichtung xB des Metallbandes 2 gesehen in der Regel zwischen dem Walzgerüst 1 und dem weiteren Walzgerüst 7 angeordnet.

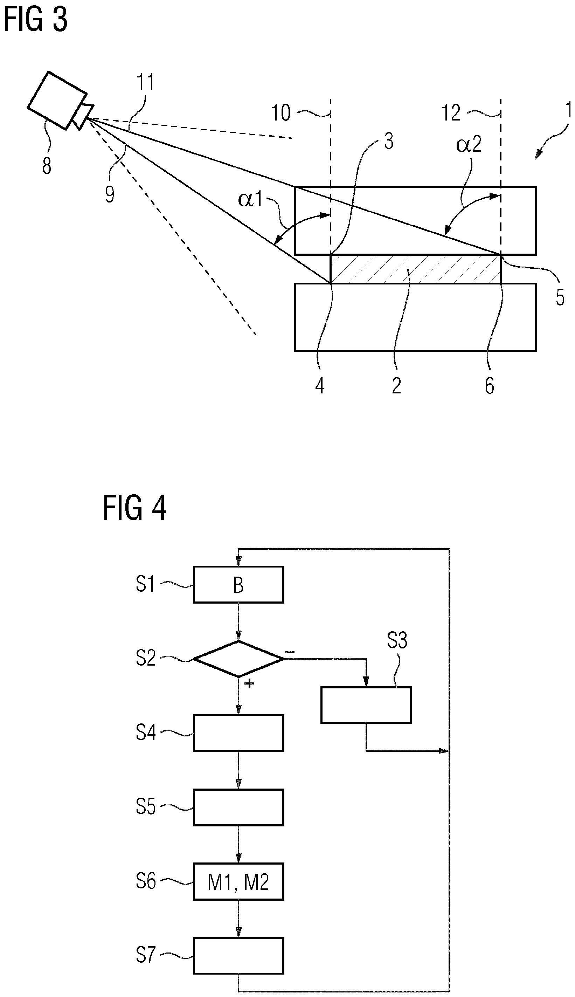

Die Kamera 8 ist gemäß FIG 1 mit einer Auswertungseinrichtung 13 datentechnisch verbunden. Die Kamera 8 ist dadurch in der Lage, von ihr erfasste Bilder B an die Auswertungseinrichtung 13 zu übermitteln. Die Auswertungseinrichtung 13 nimmt die erfassten Bilder B entgegen und wertet sie aus. Die Auswertungseinrichtung 13 ist, wie durch die Bezeichnung "µP" angedeutet ist, softwareprogrammierbar. Die Auswertungseinrichtung 13 ist mit einem Computerprogramm 14 programmiert, das seinerseits Maschinencode 15 umfasst. Der Maschinencode 15 ist von der Auswertungseinrichtung 13 unmittelbar abarbeitbar. Die Abarbeitung des Maschinencodes 15 durch die Auswertungseinrichtung 13 bewirkt, dass die Auswertungseinrichtung 13 ein Ermittlungsverfahren ausführt, das nachstehend zunächst in Verbindung mit FIG 4, später auch in Verbindung mit den weiteren FIG, näher erläutert wird.

Gemäß FIG 4 nimmt die Auswertungseinrichtung 13 in einem Schritt S1 von der Kamera 8 ein von der Kamera 8 erfasstes Bild B des Metallbandes 2 entgegen.

In einem Schritt S2 prüft die Auswertungseinrichtung 13, ob eine in der Auswertungseinrichtung 13 gespeicherte Sequenz von bereits entgegengenommenen Bildern B bereits vollständig ist.

Solange die Sequenz noch unvollständig ist, geht die Auswertungseinrichtung 13 zu einem Schritt S3 über. Im Schritt S3 fügt die Auswertungseinrichtung 13 das im Schritt S1 entgegengenommene Bild B zu der Sequenz hinzu. Sodann geht die Auswertungseinrichtung 13 wieder zum Schritt S1 zurück.

Sobald die Sequenz vollständig ist, geht die Auswertungseinrichtung 13 zu einem Schritt S4 über. Im Schritt S4 entfernt die Auswertungseinrichtung 13 das älteste Bild B der Sequenz. Sodann fügt die Auswertungseinrichtung 13 in einem Schritt S5 das im Schritt S1 entgegengenommene Bild B zu der Sequenz hinzu. Die Sequenz ist damit wieder vollständig, ist aber um einen Zyklus aktualisiert.

In einem nachfolgenden Schritt S6 wertet die Auswertungseinrichtung 13 die Bilder B der Sequenz von Bildern B aus. Sie ermittelt im Schritt S6 ein Maß M1 für die Randwelligkeit der unteren bedienseitigen Bandkante 4 und ein Maß M2 für die Randwelligkeit der oberen antriebsseitigen Bandkante 5. Der Schritt S6 ist der eigentliche Kerngegenstand der vorliegenden Erfindung. Er wird später noch detailliert erläutert.

In einem nachfolgenden Schritt S7 führt die Auswertungseinrichtung 13 weitere Maßnahmen durch, beispielsweise eine Visualisierung der Ergebnisse des Schrittes S6 oder eine Meldung an eine das Walzgerüst 1 steuernde Steuereinrichtung. Die Steuereinrichtung ist in den FIG nicht dargestellt. Im Schritt S7 aus geht die Auswertungseinrichtung 13 wieder zum Schritt S1 zurück.

Die Auswertungseinrichtung 13 führt die Abfolge der Schritte S1 bis S7 und damit insbesondere das Entgegennehmen jeweils eines Bildes B und das Auswerten der Bilder B der jeweiligen Sequenz also iterativ immer wieder aus. Eine Zykluszeit kann mit einer Frequenz im Bereich einer üblichen Videofrequenz korrespondieren, also beispielsweise zwischen 20 und 80 Bildern B pro Sekunde, insbesondere zwischen 30 und 60 Bildern B pro Sekunde. Beispielsweise bei einer Erfassung von 25 Bildern pro Sekunde liegt die Zykluszeit bei 40 ms.

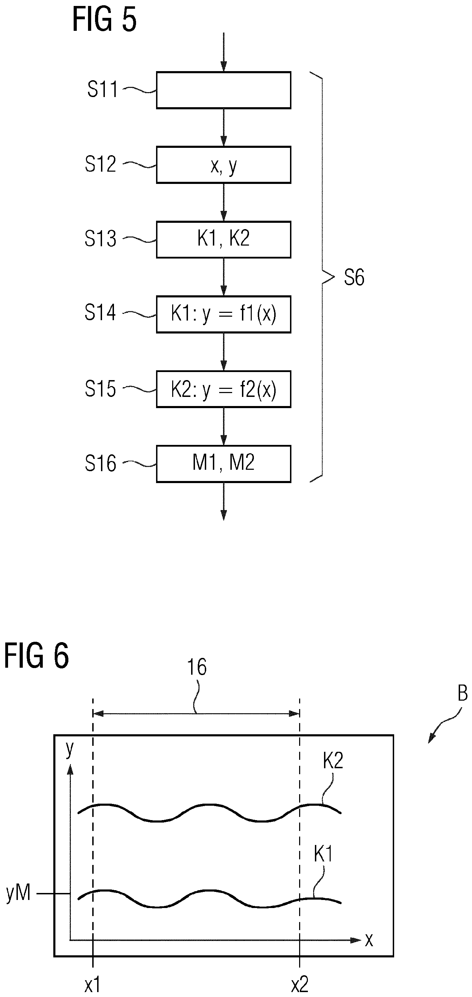

Im Rahmen des Schrittes S6 greift die Auswertungseinrichtung 13 gemäß FIG 5 zunächst in einem Schritt S11 eines der Bilder B der Sequenz von Bildern B heraus.

Für das im Schritt S11 selektierte Bild B bestimmt die Auswertungseinrichtung 13 in einem Schritt S12 Koordinaten x, y eines Koordinatensystems. Die Auswertungseinrichtung 13 legt also für das selektierte Bild B das Koordinatensystem fest. Das Koordinatensystem ist zweidimensional und gemäß FIG 6 auf das jeweilige Bild B bezogen. Im einfachsten Fall verläuft die Koordinate x in der Längsrichtung des Bildes B, die Koordinate y in der Höhenrichtung des Bildes B.

FIG 6 zeigt zugleich auch zwei bevorzugte Ausgestaltungen. Die eine bevorzugte Ausgestaltung besteht darin, dass die Richtung der x-Koordinate ("andere Koordinate" im Sinne der Ansprüche) im wesentlichen in der Transportrichtung xB des Metallbandes 1 verläuft. Zum anderen bilden die einzelnen Bildelemente (Pixel) des jeweiligen Bildes B in aller Regel ein orthogonales, gleichmäßiges Raster. Das Raster weist also zwei zueinander orthogonale Vorzugsrichtungen auf. Die andere bevorzugte Ausgestaltung besteht darin, dass die x-Richtung mit einer dieser beiden Vorzugsrichtungen übereinstimmt und damit im Ergebnis die y-Richtung mit der anderen dieser beiden Vorzugsrichtungen übereinstimmt.

Für das im Schritt S11 selektierte Bild B ermittelt die Auswertungseinrichtung 13 in einem Schritt S13 die Abbilder K1, K2 der Bandkanten 4, 5. Beispielsweise kann die Auswertungseinrichtung 13 in dem Fall, dass das Metallband 2 in dem Walzgerüst 1 warmgewalzt wird und die Kamera 8 eine Wärmebild- bzw. Infrarotkamera ist, in dem Bild B die scharfen Übergänge von niedrigen zu hohen Intensitätswerten ermitteln und den jeweiligen Übergang als Abbild K1, K2 der Bandkanten 4, 5 ermitteln. Entsprechende Ermittlungsverfahren zur Kantendetektion sind Fachleuten allgemein bekannt. FIG 6 zeigt rein beispielhaft die ermittelten Abbilder K1, K2. Natürlich könnten die Abbilder K1, K2 auch einen anderen Verlauf der Bandkanten 4, 5 aufweisen.

In einem Schritt S14 ermittelt die Auswertungseinrichtung 13 für die bedienseitige Bandkante 4 bzw. deren Abbild K1 den Wert der einen Koordinate y als Funktion der anderen Koordinate x. Die Auswertungseinrichtung 13 ermittelt also im Schritt S14 in dem Bild B und dem auf das Bild B bezogenen Koordinatensystem für die bedienseitige Bandkante 4 bzw. deren Abbild K1 einen Verlauf der jeweiligen Bandkante 4 bzw. deren Abbild K1 als Funktion der Koordinate x: $K 1 : y = f 1 \left(x\right) .$

In einem Schritt S15 führt die Auswertungseinrichtung 13 die gleiche Vorgehensweise für die antriebsseitige Bandkante 5 bzw. deren Abbild K2 durch: $K 2 : y = f 2 \left(x\right) .$

Sodann ermittelt die Auswertungseinrichtung 13 in einem Schritt S16 anhand des funktionalen Verlaufs der jeweiligen Bandkante 4, 5 bzw. des entsprechenden Abbildes K1, K2 die Maße M1, M2 für die Randwelligkeit der jeweiligen Bandkante 4, 5. Die Auswertungseinrichtung 13 wertet den jeweiligen funktionalen Verlaufs hierbei nur innerhalb eines jeweiligen Auswertungsbereiches 16 der Bilder B aus. Für die Ermittlung des Maßes M1 verwertet die Auswertungseinrichtung 13 den funktionalen Verlauf für das Abbild K1, für die Ermittlung des Maßes M2 den funktionalen Verlauf für das Abbild K2.

Nachstehend wird für die gesamte Beschreibung ausschließlich auf die bedienseitige Bandkante 4 und den zugehörigen funktionalen Verlauf für das Abbild K1 und das dadurch ermittelte Maß M1 eingegangen. Für die antriebsseitige Bandkante 5, den zugehörigen funktionalen Verlauf für das Abbild K2 und das dadurch ermittelte Maß M2 gelten stets völlig analoge Ausführungen.

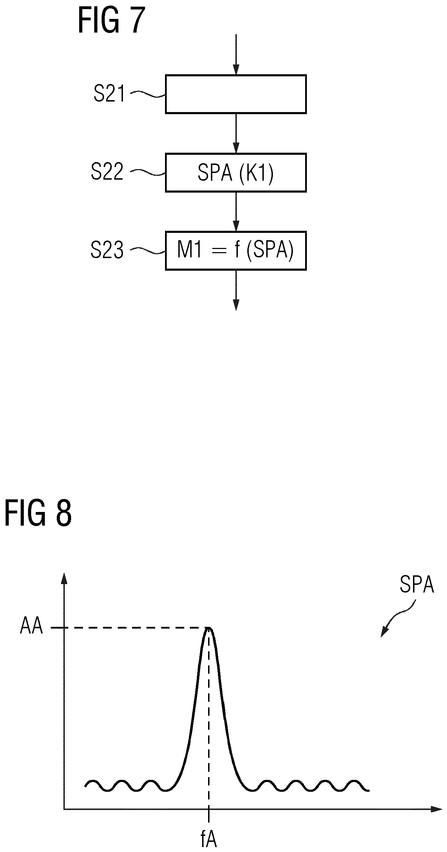

In manchen Fällen ermittelt die Auswertungseinrichtung 13 das Maß M1 für die Randwelligkeit der bedienseitigen Bandkante 4 einzeln, also Bild B für Bild B. Beispielsweise kann die Auswertungseinrichtung 13 gemäß FIG 7 in einem Schritt S21 eines der Bilder B selektieren. In einem Schritt S22 ermittelt die Auswertungseinrichtung 13 sodann das Ortsspektrum SPA des funktionalen Verlaufs der bedienseitigen Bandkante 4 bzw von dessen Abbild K1. FIG 8 zeigt beispielhaft ein mögliches Ortsspektrum SPA. Zum Ermitteln des Maßes M1 wertet die Auswertungseinrichtung 13 in einem Schritt S23 das Ortsspektrum SPA aus. Beispielsweise kann die Auswertungseinrichtung 13 entsprechend der Darstellung in FIG 8 in dem Ortsspektrum SPA die größte Amplitude AA und die zugehörige Ortsfrequenz fA ermitteln und anhand dieser beiden Werte das Maß M1 ermitteln. Das Maß M1 hängt zumindest von der größten Amplitude AA ab und ist umso größer, je größer die größte Amplitude AA ist. Die Abhängigkeit von der zugehörigen Ortsfrequenz fA weist üblicherweise ein geringeres Ausmaß auf. Auch andere Arten der Auswertung sind möglich.

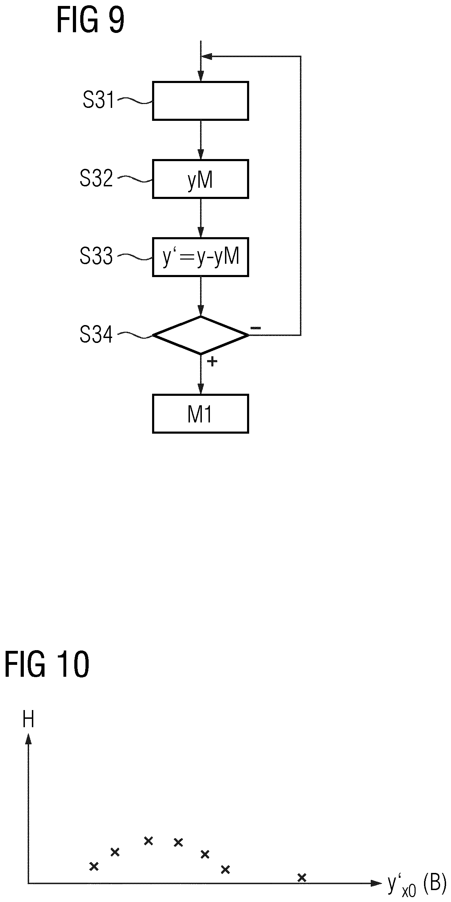

In der Regel verwertet die Auswertungseinrichtung 13 jedoch zum Ermitteln des Maßes M1 für die Randwelligkeit der Bandkante 4 eine Sequenz von erfassten Bildern B des Metallbandes 2. Im Falle der Verwertung einer Sequenz von erfassten Bildern B müssen die in den Bildern B enthaltenen Sachverhalte miteinander vergleichbar sein. Um die Bilder B bzw. die in den Bildern B enthaltenen funktionalen Verläufe der bedienseitigen Bandkante 4 bzw. des jeweiligen Abbildes K1 vergleichen zu können bzw. bildübergreifend betrachten zu können, erfolgt in einer Vorbereitung die Ermittlung von modifizierten Verläufen. Diese Vorgehensweise wird nachstehend in Verbindung mit FIG 9 erläutert.

Gemäß FIG 9 selektiert die Auswertungseinrichtung 13 in einem Schritt S31 eines der Bilder B der Sequenz. In einem Schritt S32 ermittelt die Auswertungseinrichtung 13 in dem Auswertungsbereich 16 dieses Bildes B den Mittelwert yM des funktionalen Verlaufs der bedienseitigen Bandkante 4 bzw. des jeweiligen Abbildes K1. Sie nimmt also die y-Werte, die bei den verschiedenen x-Werten auftreten, addiert diese und teilt die Summe durch die Anzahl an x-Werten. Der Mittelwert yM ist für das Abbild K1 auch in FIG 6 mit eingezeichnet. In einem Schritt S33 subtrahiert die Auswertungseinrichtung 13 den im Schritt S32 ermittelten Mittelwert yM von den y-Werten und ermittelt so einen modifizierten funktionalen Verlauf der bedienseitigen Bandkante 4 in dem jeweiligen Bild B. Die y-Werte des modifizierten funktionalen Verlaufs werden nachstehend mit dem Bezugszeichen y' versehen.

In einem Schritt S34 prüft die Auswertungseinrichtung 13, ob sie die Schritte S31 bis S33 bereits für alle Bilder B der Sequenz ausgeführt hat. Solange dies nicht der Fall ist, geht die Auswertungseinrichtung 13 zum Schritt S31 zurück. Bei der erneuten Ausführung des Schrittes S31 selektiert die Auswertungseinrichtung 13 eines der Bilder B der Sequenz, für das sie die Schritte S32 und S33 noch nicht ausgeführt hat. Anderenfalls ist die Vorbereitung abgeschlossen. In einem Schritt S35 kann die Auswertungseinrichtung 13 somit, aufbauend auf den modifizierten Verläufen, für die Sequenz von Bildern B weitere Auswertungen vornehmen, insbesondere das Maß M1 ermitteln.

Nachfolgend werden verschiedene mögliche Ausgestaltungen des Schrittes S35 erläutert.

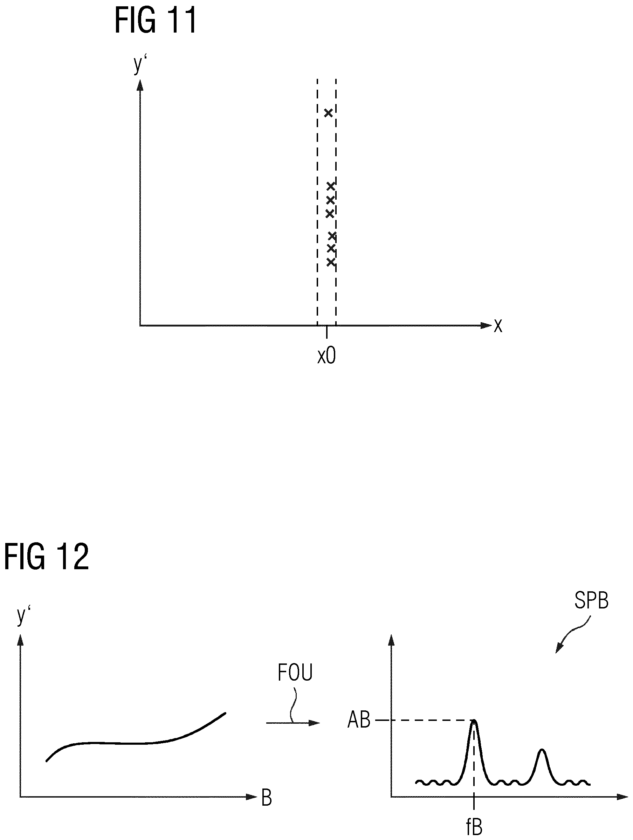

Beispielsweise kann gemäß den FIG 10 und 11 im Schritt S35 eine statistische Auswertung der modifizierten Verläufe der bedienseitigen Bandkante 4 erfolgen. Insbesondere kann die Auswertungseinrichtung 13 für einen einheitlichen Wert x0 der x-Koordinate der Bilder B eine statistische Auswertung der bei diesem Wert x0 auftretenden y'-Werte vornehmen. FIG 10 zeigt rein beispielhaft eine mögliche Häufigkeitsverteilung H der y'-Werte über die Bilder B der Sequenz hinweg bei dem einheitlichen Wert x0, FIG 11 für den einheitlichen Wert x0 die auftretenden y'-Werte. Als statistische Größen können beispielsweise der Mittelwert der y'-Werte für den einheitlichen Wert x0 und die Streuung oder die Varianz um diesen Mittelwert verwertet werden. Die Ermittlungen können von der Auswertungseinrichtung 13 - getrennt voneinander - für mehrere einheitliche Werte x0 vorgenommen werden. Somit kann die statistische Auswertung in der x-Richtung ortsaufgelöst sein.

Anhand der ermittelten statistischen Größen ermittelt die Auswertungseinrichtung 13 sodann das Maß M1. Beispielsweise kann das Maß M1 umso größer sein, je größer die Streuung oder die Varianz ist. Auch können die Mittelwerte herangezogen werden und analog zu den FIG 7 und 8 ausgewertet werden.

Alternativ zu einer statistischen Auswertung ist es möglich, dass die Auswertungseinrichtung 13 für den einheitlichen Wert x0 der x-Koordinate der Bilder B eine zeitliche Auswertung der bei diesem einheitlichen Wert x0 auftretenden y'-Werte vornimmt. Beispielsweise kann die Auswertungseinrichtung 13 über die Sequenz von Bildern B hinweg für den einheitlichen Wert x0 die zeitliche Änderung der y'-Werte auswerten. FIG 12 zeigt beispielhaft einen möglichen zeitlichen Verlauf der y'-Werte für einen bestimmten einheitlichen Wert x0. Beispielsweise kann die Auswertungseinrichtung 13, wie ebenfalls in FIG 12 dargestellt ist, ein Zeitspektrum SPB der zeitlichen Änderung der y'-Werte ermitteln und das Zeitspektrum SPB auswerten. Die Ermittlung des Zeitspektrums SPB ist in FIG 12 durch die Buchstaben "FOU" für Fouriertransformation angedeutet.

Beispielsweise kann die Auswertungseinrichtung 13 in dem Zeitspektrum SPB die größte Amplitude AB und die zugehörige Zeitfrequenz fB ermitteln und anhand dieser beiden Werte das Maß M1 ermitteln. Das Maß M1 hängt zumindest von der größten Amplitude AB ab und ist umso größer, je größer die größte Amplitude AB ist. Die Abhängigkeit von der zugehörigen Zeitfrequenz fB weist üblicherweise ein geringeres Ausmaß auf. Auch andere Arten der Auswertung sind möglich.

Die Auswertungseinrichtung 13 kann die zeitbasierte Auswertung - beispielsweise die in FIG 12 dargestellte Art der Auswertung - getrennt voneinander für mehrere einheitliche Werte x0 vornehmen. Es ist also möglich, dass die Ermittlung ortsaufgelöst in der x-Koordinate erfolgt. Anhand der ortsaufgelösten Ermittlung des zeitlichen Verlaufs bzw. der zeitlichen Verläufe kann die Auswertungseinrichtung 13 sodann das Maß M1 für die Randwelligkeit der bedienseitigen Bandkante 4 ermitteln.

Vorstehend wurden für die bedienseitige Bandkante 4 und den zugehörigen funktionalen Verlauf für das Abbild K1 verschiedene Vorgehensweisen für die Ermittlung des Maßes M1 erläutert. Wie bereits erwähnt, gelten für die antriebsseitige Bandkante 5 und den zugehörigen funktionalen Verlauf für das Abbild K2 und das dadurch ermittelte Maß M2 stets völlig analoge Ausführungen.

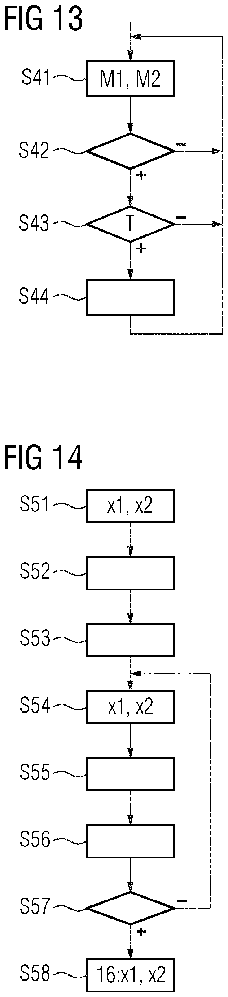

Wie vorstehend in Verbindung mit FIG 4 erläutert, werden die Maße M1, M2 iterativ immer wieder neu ermittelt. Die ermittelten Werte für die Maße M1, M2 können sich daher im Laufe der Zeit ändern. Es ist möglich, dass die Auswertungseinrichtung 13 einen neu ermittelten Wert sofort als gültig übernimmt. Vorzugsweise aber geht die Auswertungseinrichtung 13 so vor, wie dies nachstehend in Verbindung mit FIG 13 erläutert wird.

Gemäß FIG 13 ermittelt die Auswertungseinrichtung 13 in einem Schritt S41 die Maße M1, M2. Der Schritt S41 korrespondiert im Kern mit der Abfolge der Schritte S1 bis S7 von FIG 4.

In einem Schritt S42 prüft die Auswertungseinrichtung, ob sich eine Änderung der Maße M1, M2 ergeben hat. Wenn dies nicht der Fall ist, geht die Auswertungseinrichtung 13 zum Schritt S41 zurück. Anderenfalls prüft die Auswertungseinrichtung 13 in einem Schritt S43, ob die Änderung der Maße M1, M2 bereits für eine vorbestimmte Zeitdauer T aufgetreten ist. Wenn dies nicht der Fall ist, geht die Auswertungseinrichtung 13 zum Schritt S41 zurück. Anderenfalls übernimmt die Auswertungseinrichtung 13 in einem Schritt S44 die geänderten Maße M1, M2 als gültig. Erst mit der Ausführung des Schrittes S44 werden die geänderten Maße M1, M2 verwertet, beispielsweise an eine Bedienperson 17 (siehe FIG 1) ausgegeben. Vom Schritt S44 aus geht die Auswertungseinrichtung 13 wieder zum Schritt S41 zurück.

Der Auswertungsbereich 16 sollte geeignet bestimmt sein. Im einfachsten Fall kann der Auswertungsbereich 16 - beispielsweise durch Festlegung einer unteren Grenze x1 und einer oberen Grenze x2 - der Auswertungseinrichtung 13 fest vorgegeben sein. Die Grenzen x1, x2 sind in FIG 6 eingezeichnet. Alternativ ist es möglich, dass die Auswertungseinrichtung 13 den Auswertungsbereich 16 bzw. dessen Grenzen x1, x2 von der Bedienperson 17 entgegennimmt. Wiederum alternativ ist es möglich, dass die Auswertungseinrichtung 13 den Auswertungsbereich 16 anhand der entgegengenommenen Bilder B selbsttätig ermittelt. Eine mögliche Vorgehensweise hierfür wird nachfolgend in Verbindung mit FIG 14 erläutert.

Gemäß FIG 14 legt die Auswertungseinrichtung 13 in einem Schritt S51 die untere Grenze x1 und/oder die obere Grenze x2 und damit den Auswertungsbereich 16 fest. Die Festlegung des Schrittes S51 ist nur vorläufig.

In einem Schritt S52 ermittelt die Auswertungseinrichtung 13 in dem festgelegten Auswertungsbereich 16 für eine Mehrzahl von Bildern B - in der Regel für alle Bilder B der später ausgewerteten Sequenz - für die bedienseitige Bandkante 4 die Streuung oder die Varianz des funktionalen Verlaufs in der y-Richtung. In einem Schritt S53 ermittelt die Auswertungseinrichtung 13 in analoger Art und Weise die Streuung oder die Varianz für die antriebsseitige Bandkante 5.

In einem Schritt S54 variiert die Auswertungseinrichtung 13 die untere Grenze x1 und/oder die obere Grenze x2. In einem darauffolgenden Schritt S55 ermittelt die Auswertungseinrichtung 13 für den nunmehr variierten Auswertungsbereich 16 erneut für die bedienseitige und die antriebsseitige Bandkante 4, 5 die Streuung oder die Varianz. Der Schritt S55 entspricht mit Ausnahme des Umstands, dass er für den variierten Auswertungsbereich 16 durchgeführt wird, der Kombination der Schritte S52 und S53.

In einem Schritt S56 ermittelt die Auswertungseinrichtung 13 - getrennt für die bedienseitige und die antriebsseitige Bandkante 4, 5 - die Änderung der Streuung oder der Varianz. In Abhängigkeit von der Änderung entscheidet die Auswertungseinrichtung 13 in einem Schritt S57, ob sie zum Schritt S54 zurückgeht und somit die untere Grenze x1 und/oder die obere Grenze x2 erneut variiert oder ob sie zu einem Schritt S58 übergeht. Im Schritt S58 übernimmt die Auswertungseinrichtung 13 die zuletzt festgelegten Werte für die untere Grenze x1 und/oder für die obere Grenze x2 endgültig. Mit dem Schritt S58 ist die Ermittlung des Auswertungsbereichs 16 abgeschlossen.

Die Prüfung des Schrittes S57 kann insbesondere umfassen, in welchem Ausmaß sich die Streuung bzw. die Varianz geändert hat. Wenn beispielsweise der Auswertungsbereich 16 im Schritt S51 groß gewählt wird und im weiteren Verlauf allmählich verkleinert wird, kann die Auswertungseinrichtung 13 zum Schritt S58 übergehen, wenn die Änderung der Streuung bzw. der Varianz klein genug geworden ist. Wenn umgekehrt der Auswertungsbereich 16 im Schritt S51 klein gewählt wird und im weiteren Verlauf allmählich vergrößert wird, kann die Auswertungseinrichtung 13 zum Schritt S58 übergehen, wenn die Änderung der Streuung bzw. der Varianz zu groß geworden ist.

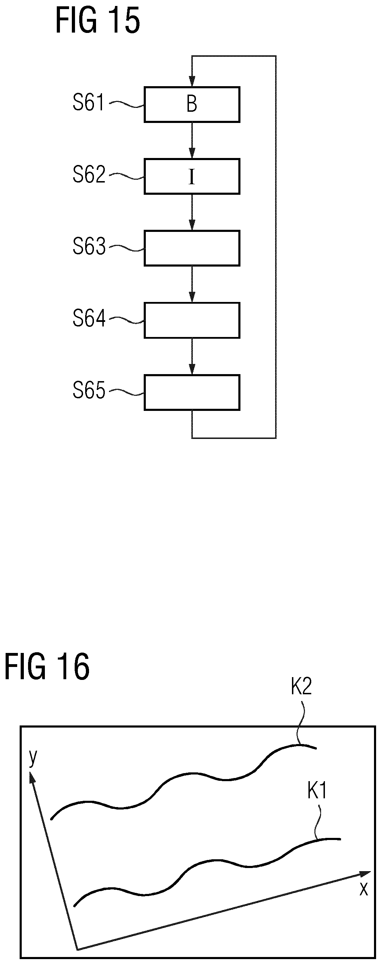

Die Kamera 8 kann im Betrieb und damit bei der Erfassung der Bilder B vibrieren. Derartige Vibrationen haben Einfluss auf die erfassten Bilder B. Vorzugsweise wird die Vorgehensweise von FIG 4 daher gemäß FIG 15 wie folgt modifiziert.

Gemäß FIG 15 nimmt die Auswertungseinrichtung 13 in einem Schritt S61 von der Kamera 8 ein von der Kamera 8 erfasstes Bild B des Metallbandes 2 entgegen. Der Schritt S61 korrespondiert mit dem Schritt S1 von FIG 4.

In einem Schritt S62 werden der Auswertungseinrichtung 13 Informationen I über die Bewegung der Kamera 8 bekannt. Die Informationen I können beispielsweise von an der Kamera 8 angeordneten Sensoren (nicht dargestellt) stammen. In diesem Fall nimmt die Auswertungseinrichtung 13 die Informationen I von den Sensoren entgegen. Alternativ ist es möglich, dass die Informationen I von der Auswertungseinrichtung 13 aus dem im Schritt S61 entgegengenommenen Bild B extrahiert werden. Auch Kombinationen dieser beiden Vorgehensweisen sind möglich.

In einem Schritt S63 ermittelt die Auswertungseinrichtung 13 anhand der Informationen I die Bewegung der Kamera 8 bei der Erfassung des im Schritt S61 entgegengenommenen Bildes B. In einem Schritt S64 korrigiert die Auswertungseinrichtung 13 in dem im Schritt S61 entgegengenommenen Bild B die Lage des Koordinatensystems. FIG 16 zeigt exemplarisch eine mögliche Lage des Koordinatensystems nach der von der Auswertungseinrichtung 13 vorgenommenen Korrektur.

Sodann geht die Auswertungseinrichtung 13 zu einem Schritt S65 über. Der Schritt S65 korrespondiert mit der Gesamtheit der Schritte S2 bis S7 von FIG 4. Vom Schritt S65 aus geht die Auswertungseinrichtung 13 wieder zum Schritt S61 über.

Die vorliegende Erfindung weist viele Vorteile auf. Insbesondere ist eine einfache und robuste Auswertung möglich. Eine fehlerträchtige Auswertung von periodischen Intensitätsvariationen ist nicht erforderlich. Vielmehr muss lediglich der Übergang von Nicht-Band zu Band und umgekehrt erkannt werden. Eine Anordnung der Kamera 8 über dem Metallband 2 ist nicht erforderlich. Die Anordnung (nur) seitlich oberhalb des Metallbandes 2 ist sogar von Vorteil.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 7: Walzgerüste
- 2: Metallband
- 3 bis 6: Bandkanten
- 8: Kamera
- 9, 11: Verbindungslinien
- 10, 12: Vertikalebenen
- 13: Auswertungseinrichtung
- 14: Computerprogramm
- 15: Maschinencode
- 16: Auswertungsbereich
- 17: Bedienperson

- AA, AB: Amplituden
- b: Bandbreite
- B: Bilder
- fA: Ortsfrequenz
- fB: Zeitfrequenz
- H: Häufigkeitsverteilung
- I: Informationen
- K1, K2: Abbilder
- M1, M2: Maße
- S1 bis S65: Schritte
- SPA, SPB: Spektren
- T: Zeitdauer
- xB: Transportrichtung
- x0: einheitliche Werte
- yB: Breitenrichtung
- x, y: Koordinaten
- x1, x2: Grenzen
- y': Werte
- yM: Mittelwert

- α1, α2: Winkel

## Patentansprüche

1. Ermittlungsverfahren für eine Randwelligkeit eines Metallbandes (2), das sich in einer Breitenrichtung (yB) über eine Bandbreite (b) von einer bedienseitigen zu einer antriebsseitigen Bandkante (4, 5) erstreckt und in einer Transportrichtung (xB) aus einem Walzgerüst (1) ausläuft,
- wobei eine Auswertungseinrichtung (13) von einer Kamera (8) iterativ immer wieder ein von der Kamera (8) erfasstes Bild (B) des Metallbandes (2) entgegennimmt,
**dadurch gekennzeichnet,**
- **dass** die Kamera (8) seitlich oberhalb des Metallbandes (2) angeordnet ist,
- **dass** die Auswertungseinrichtung (13) in einem auf das jeweilige Bild (B) bezogenen zweidimensionalen Koordinatensystem für die bedienseitige und die antriebsseitige Bandkante (4, 5) den Wert der einen Koordinate (y) als Funktion der anderen Koordinate (x) und dadurch in dem jeweiligen Bild (B) einen Verlauf der jeweiligen Bandkante (4, 5) als Funktion der anderen Koordinate (x) ermittelt und
- **dass** die Auswertungseinrichtung (13) anhand des funktionalen Verlaufs der jeweiligen Bandkante (4, 5) innerhalb eines jeweiligen Auswertungsbereiches (16) der Bilder (B) ein Maß (M1, M2) für die Randwelligkeit der jeweiligen Bandkante (4, 5) ermittelt.

2. Ermittlungsverfahren nach Anspruch 1,
**dadurch gekennzeichnet,**
**dass** die Richtung der anderen Koordinate (x) der Koordinatensysteme im wesentlichen in der Transportrichtung (xB) verläuft.

3. Ermittlungsverfahren nach Anspruch 1 oder 2,
**dadurch gekennzeichnet,**
**dass** die Bildelemente des jeweiligen Bildes (B) ein orthogonales, gleichmäßiges Raster bilden, das zwei zueinander orthogonale Vorzugsrichtungen aufweist, und dass die andere Koordinate (x) der Koordinatensysteme im wesentlichen mit einer dieser beiden Vorzugsrichtungen übereinstimmt.

4. Ermittlungsverfahren nach Anspruch 1, 2 oder 3,
**dadurch gekennzeichnet,**
**dass** der Auswertungsbereich (16) der Auswertungseinrichtung (13) fest vorgegeben ist oder dass die Auswertungseinrichtung (13) den Auswertungsbereich (16) von einer Bedienperson (17) entgegennimmt.

5. Ermittlungsverfahren nach Anspruch 1, 2 oder 3,
**dadurch gekennzeichnet,**
**dass** die Auswertungseinrichtung (13) den Auswertungsbereich (16) anhand der entgegengenommenen Bilder (B) selbsttätig ermittelt.

6. Ermittlungsverfahren nach Anspruch 5,
**dadurch gekennzeichnet,**
**dass** die Auswertungseinrichtung (13) zur selbsttätigen Ermittlung des Auswertungsbereichs (16)
- eine vorläufige untere und/oder eine vorläufige obere Grenze (x1, x2) für die andere Koordinate (x) festlegt und für eine Mehrzahl von Bildern (B) zwischen der vorläufigen unteren und der vorläufigen oberen Grenze (x1, x2) für die jeweilige Bandkante (4, 5) die Streuung oder die Varianz des jeweiligen funktionalen Verlaufs in Richtung der einen Koordinate (y) ermittelt,
- die vorläufige untere und/oder vorläufige obere Grenze (x1, x2) variiert und für die Mehrzahl von Bildern (B) innerhalb der variierten vorläufigen unteren und der variierten vorläufigen oberen Grenze (x1, x2) erneut die Streuung oder die Varianz des jeweiligen funktionalen Verlaufs in Richtung der einen Koordinate (y) ermittelt und
- anhand der Änderung der Streuung oder der Varianz des jeweiligen funktionalen Verlaufs in Richtung der einen Koordinate (y) bestimmt, ob und gegebenenfalls in welche Richtung sie die vorläufige untere und/oder vorläufige obere Grenze (x1, x2) erneut variiert oder endgültig als obere und/oder untere Grenze (x1, x2) übernimmt.

7. Ermittlungsverfahren nach einem der Ansprüche 1 bis 6,
**dadurch gekennzeichnet,**
**dass** die Auswertungseinrichtung (13) für die Bilder (B) einzeln das Maß (M1, M2) für die Randwelligkeit der jeweiligen Bandkante (4, 5) ermittelt.

8. Ermittlungsverfahren nach Anspruch 7,
**dadurch gekennzeichnet,**
**dass** die Auswertungseinrichtung (13) zum Ermitteln des Maßes (M1, M2) der Randwelligkeit der jeweiligen Bandkante (4, 5) das Ortsspektrum (SPA) des funktionalen Verlaufs der jeweiligen Bandkante (4, 5) in dem jeweiligen Bild (B) ermittelt und das ermittelte Ortsspektrum (SPA) auswertet.

9. Ermittlungsverfahren nach einem der Ansprüche 1 bis 6,
**dadurch gekennzeichnet,**
**dass** die Auswertungseinrichtung (13) zum Ermitteln des Maßes (M1, M2) für die Randwelligkeit der jeweiligen Bandkante (4, 5) eine Sequenz von erfassten Bildern (B) des Metallbandes (2) verwertet.

10. Ermittlungsverfahren nach Anspruch 9,
**dadurch gekennzeichnet,**
**dass** die Auswertungseinrichtung (13) in den Bildern (B) der Sequenz zum Auswerten des funktionalen Verlaufs der jeweiligen Bandkante (4, 5) in dem Auswertungsbereich (16) des jeweiligen Bildes (B) für das jeweilige Bild (B) den Mittelwert (yM) des jeweiligen funktionalen Verlaufs in Richtung der einen Koordinate (y) ermittelt und den ermittelten Mittelwert (yM) von dem in dem jeweiligen Bild (B) ermittelten funktionalen Verlauf der jeweiligen Bandkante (4, 5) subtrahiert und so einen modifizierten funktionalen Verlauf der jeweiligen Bandkante (4, 5) in dem jeweiligen Bild (B) ermittelt und aufbauend auf den modifizierten Verläufen für die Sequenz von Bildern (B) weitere Auswertungen vornimmt.

11. Ermittlungsverfahren nach Anspruch 10,
**dadurch gekennzeichnet,**
**dass** die weiteren Auswertungen eine statistische Auswertung der modifizierten Verläufe der jeweiligen Bandkante (4, 5) in den Bildern (B) der Sequenz umfassen.

12. Ermittlungsverfahren nach Anspruch 11,
**dadurch gekennzeichnet,**
**dass** die statistische Auswertung eine in der anderen Koordinate (x) ortsaufgelöste Ermittlung von statistischen Größen des jeweiligen modifizierten funktionalen Verlaufs in Richtung der einen Koordinate (y) umfasst.

13. Ermittlungsverfahren nach Anspruch 10,
**dadurch gekennzeichnet,**
**dass** die Auswertungseinrichtung (13) das Maß (M1, M2) für die Randwelligkeit der jeweiligen Bandkante (4, 5) dadurch ermittelt, dass sie ortsaufgelöst in der anderen Koordinate (x) über die Sequenz von Bildern (B) hinweg für die modifizierten funktionalen Verläufe der Bandkanten (4, 5) die zeitliche Änderung in Richtung der einen Koordinate (y) auswertet.

14. Ermittlungsverfahren nach Anspruch 13,
**dadurch gekennzeichnet,**
**dass** die Auswertungseinrichtung (13) ein Zeitspektrum (SPB) der zeitlichen Änderung in Richtung der einen Koordinate (y) ermittelt und das Zeitspektrum (SPB) auswertet.

15. Ermittlungsverfahren nach einem der obigen Ansprüche,
**dadurch gekennzeichnet,**
**dass** die Auswertungseinrichtung (13) Änderungen des Maßes (M1, M2) für die Randwelligkeit der jeweiligen Bandkante (4, 5) erst dann als gültig übernimmt, wenn diese Änderungen für eine Zeitdauer bestehen, die größer als eine Minimalzeitdauer (T) ist.

16. Ermittlungsverfahren nach einem der obigen Ansprüche,
**dadurch gekennzeichnet,**
**dass** die Auswertungseinrichtung (13) eine Bewegung der Kamera (8) beim Erfassen der Bilder (B) ermittelt und die Lage des jeweiligen Koordinatensystems in den erfassten Bildern (B) vor dem Ermitteln des funktionalen Verlaufs der jeweiligen Bandkante (4, 5) um die Bewegung der Kamera (8) korrigiert.

17. Computerprogramm für eine softwareprogrammierbare Auswertungseinrichtung (13), wobei das Computerprogramm Maschinencode (15) umfasst, der von der Auswertungseinrichtung (13) unmittelbar abarbeitbar ist, wobei die Abarbeitung des Maschinencodes (15) durch die Auswertungseinrichtung (13) bewirkt, dass die Auswertungseinrichtung (13) ein Ermittlungsverfahren nach einem der obigen Ansprüche ausführt.

18. Auswertungseinrichtung, wobei die Auswertungseinrichtung softwareprogrammierbar ist und mit einem Computerprogramm (14) nach Anspruch 17 programmiert ist, so dass die Auswertungseinrichtung ein Ermittlungsverfahren nach einem der Ansprüche 1 bis 16 ausführt.

19. Walzeinrichtung,
- wobei die Walzeinrichtung ein Walzgerüst (1) zum Walzen eines sich in einer Breitenrichtung (yB) über eine Bandbreite (b) von einer bedienseitigen zu einer antriebsseitigen Bandkante (4, 5) erstreckenden Metallbandes (2) aufweist, so dass das Metallband (2) in einer Transportrichtung (xB) aus dem Walzgerüst (1) ausläuft,
- wobei die Walzeinrichtung eine Kamera (8) aufweist, die seitlich oberhalb einer Passline angeordnet ist, auf welcher das Metallband (2) aus dem Walzgerüst (1) ausläuft,
- wobei die Walzeinrichtung eine Auswertungseinrichtung (13) aufweist, die mit der Kamera (8) zum Entgegennehmen von mittels der Kamera (8) erfassten Bildern (B) datentechnisch verbunden ist, als Auswertungseinrichtung (13) nach Anspruch 18 ausgebildet ist und ein Ermittlungsverfahren nach einem der Ansprüche 1 bis 16 ausführt.

20. Walzeinrichtung nach Anspruch 19,
**dadurch gekennzeichnet,**
**dass** sie ein weiteres Walzgerüst aufweist, das auslaufseitig des erstgenannten Walzgerüsts (1) angeordnet ist, und dass die Kamera (8) in Transportrichtung (xB) des Metallbandes (2) gesehen zwischen dem erstgenannten Walzgerüst (1) und dem weiteren Walzgerüst (7) angeordnet ist.

21. Walzeinrichtung nach Anspruch 19 oder 20,
**dadurch gekennzeichnet,**
**dass** die Kamera (8) derart angeordnet ist, dass eine bedienseitige Verbindungslinie (9) von der Kamera (8) zu der bedienseitigen Bandkante (4) mit einer die bedienseitige Bandkante (4) enthaltenden bedienseitigen Vertikalebene (10) einen bedienseitigen Winkel (α1) bildet, der zwischen 30° und 70° liegt, und/oder eine antriebsseitige Verbindungslinie (11) von der Kamera (8) zu der antriebsseitigen Bandkante (5) mit einer die antriebsseitige Bandkante (5) enthaltenden antriebsseitigen Vertikalebene (12) einen antriebsseitigen Winkel (α2) bildet, der zwischen 30° und 70° liegt.
